# EUROPÄISCHE PATENTSCHRIFT

(11) **EP 3 454 427 B1**
(45) Veröffentlichungstag und Bekanntmachung des Hinweises auf die Patenterteilung: **24.02.2021**
(21) Anmeldenummer: 17190596.1
(22) Anmeldetag: 12.09.2017
(51) Int. Cl.: H01R 13/52, H01R 13/58, H02G 3/08, H01R 13/688, H01R 31/06, H02G 15/013, H02G 15/115

(54) **STECKVERBINDUNGSSATZ, INSTALLATIONSSATZ UND ELEKTRISCHE INSTALLATION**
CONNECTION KIT, INSTALLATION KIT AND ELECTRIC INSTALLATION
ENSEMBLE CONNECTEUR KIT D'INSTALLATION ET INSTALLATION ÉLECTRIQUE

(43) Veröffentlichungstag der Anmeldung: 13.03.2019
(73) Patentinhaber: Woertz Engineering AG, 4132 Muttenz (CH)
(72) Erfinder: ONODI, Tamas, 8000 Thalwil (CH); DREIER, Andreas, 4208 Nunningen (CH)
(74) Vertreter: Samson & Partner Patentanwälte mbB

(56) Entgegenhaltungen:
- DE-A1- 10 054 714
- JP-A- 2016 072 049
- US-A1- 2013 137 285
- US-A1- 2014 213 074
- US-B1- 6 486 766

## Beschreibung

### GEBIET DER ERFINDUNG

Die Erfindung betrifft einen Steckverbindungssatz zum Verbinden zweier Kabel, der vor Eindringen von Wasser bzw. Staub geschützt ist bzw. einen Installationssatz bzw. elektrische Installation mit diesem Steckverbindungssatz.

### HINTERGRUND DER ERFINDUNG

EP 1 150 392 A1 betrifft eine elektrische Verbindung für Hochdruckumgebungen, bei der Kabelkontakte innerhalb eines hochdruckfesten Gehäuses angeordnet sind.

US 2014/0213074 A1 betrifft einen tragbareren Verbinder, welcher ein Gehäuse mit einer Basis und einen Mantel umfasst, die sich von der Basis aus erstreckt. Der Mantel beinhaltet einen Tunnel mit einem offenen Ende und einer Innenfläche. Das offene Ende des Tunnels ist konfiguriert, um einen Gegenstecker darin aufzunehmen. Die Basis ist so konfiguriert, dass sie an einem tragbaren Gegenstand befestigt werden kann. Die Anschlüsse werden direkt an dem Mantel gehalten, so dass sich die Gegensegmente der Anschlüsse mindestens eines der beiden direkt an oder durch die Innenfläche des Tunnels erstrecken. Der Tunnel des Mantels ist ausgestaltet um den Gegenstecker durch das offene Ende in den Tunnel aufzunehmen, so dass die Gegensegmente der Klemmen mit den Gegenenden des Gegensteckers im Tunnel zusammenpassen.

DE 10054714 A1 betrifft ein Verfahren zum Abdichten eines Kabels oder Kabelsatzes an/in einem Kabeldurchführungselement, wobei das Kabel bzw. der Kabelsatz mindestens einen Kabelkanal durchsetzt und im Bereich mindestens einer Kabelaustrittsöffnung aus dem Kabeldurchführungselement austritt, mit den folgenden Verfahrensschritten:
a) Aufspritzen eines Dichtelementes in einem ersten Spritzvorgang aus insbesondere dauerelastischem Kunststoff, insbesondere ein Elastomer, auf den Bereich der Kabelaustrittsöffnung, wobei ein aus dem Kabelkanal austretender Abschnitt des Kabels bzw. Kabelsatzes umspritzt wird;
b) Aufsetzen einer Außenform auf den Bereich der Kabelaustrittsöffnung, derart, dass zwischen der Innenwand der Außenform und der Oberfläche des Dichtelementes ein Hohlraum gebildet wird; c) Ausspritzen des Hohlraumes in einem zweiten Spritzvorgang mit einem vergleichsweise zum Material des Dichtelementes härteren Kunststoffmaterial, derart, dass beim Spritzvorgang das einen Innenformkörper bildende Dichtelement nachhaltig komprimiert wird; d) Ausformen des durch den härteren Kunststoffgebildeten Mantelelementes nach seiner Verfestigung.

JP 2016-072049 A betrifft das Problem einen Stecker leicht an eine andere Spezifikation anzupassen. Hierzu wird eine Mehrzahl von Anschlussfittings parallel in einem Steckergehäuse montiert. Jede Klemmenanordnung beinhaltet einen Klemmenanschluss und einen Komponentenanschluss. Am Bauteilanschluss wird ein Überhangstück gebildet. Im Steckergehäuse werden Öffnungen gebildet, und die Umgebung des Überhangsstücks wird freigelegt. Wenn ein Verbindungselement aus den Öffnungen montiert wird, wird ein im Verbindungselement angeordnetes Verbindungsglied zwischen den beiden Überhangstücken benachbarter Anschlussfittings gepresst, die dadurch verbunden werden. Folglich lautet die Spezifikation von einem Relaisanschluss auf eine Verbindung durch ein Verbindungsglied umgestellt.

### KURZFASSUNG DER ERFINDUNG

Ein erster Aspekt der Erfindung betrifft einen Steckverbindungssatz zum Verbinden einer Abzweigleitung mit einer Durchgangsleitung, umfassend ein Steckergehäuse, das männliche Kontakteinsätze umschließt, ein Buchsengehäuse, das weiblichen Kontakteinsätze umschließt und wenigstens zwei flexible Kabelenden, wobei ein flexibles Kabelende an das Steckergehäuse und ein flexibles Kabelende an das Buchsengehäuse angespritzt ist. Dabei sind die weiblichen und männlichen Kontakteinsätze jeweils mit Kabeladern in den flexiblen Kabelenden fest verbunden, wobei das Steckergehäuse und das Buchsengehäuse jeweils durch angießen von Kunststoff an einen Grundkörper mit den eingesetzten Kontakteinsätzen und daran angeschlossenen flexiblen Kabelenden hergestellt ist, wodurch ein massiver einstückiger Stecker bzw. eine massive einstückige Buchse gebildet ist. Die weiblichen und männlichen Kontakteinsätze sind in einem Kontaktbereich elektrisch zwischen dem Steckergehäuse und dem Buchsengehäuse miteinander verbindbar. Der Steckverbindungssatz umfasst außerdem eine Dichthülse, welche das Steckergehäuse, das Buchsengehäuse und den Kontaktbereich zwischen den beiden Gehäusen umhüllt, um den Steckverbindungssatz vor einem Eindringen von Wasser und/oder. Staub zu schützen.

Ein anderer Aspekt betrifft einen Installationssatz mit wenigstens einem Flachkabel, wenigstens einem Steckverbindungssatz gemäß dem ersten Aspekt, wenigstens einer Abzweigleitung.

Ein weiterer Aspekt betrifft eine elektrische Installation, welche eine als Flachkabel ausgeführte Durchgangsleitung umfasst und wenigstens einen Steckverbindungssatz gemäß dem ersten Aspekt, sowie wenigstens eine durch jeweils einen Steckverbindungssatz mit dem Flachkabel verbundene Abzweigleitung.

### ALLGEMEINE ERLÄUTERUNG, AUCH BETREFFEND FAKULTATIVE

### AUSGESTALTUNGEN DER ERFINDUNG

Ein erster Aspekt der Erfindung betrifft einen Steckverbindungssatz zum Verbinden einer Abzweigleitung mit einer Durchgangsleitung. Die Durchgangsleitung kann dabei als ein Flachkabel ausgeführt sein, während die Abzweigleitung als ein Rundkabel ausgeführt sein kann. Rundkabel sind Kabel deren Adern in üblicher Weise verdreht in Kabellängsrichtung verlaufen. Bei Flachkabeln verlaufen die Adern über die Gesamtlänge des Kabels im Wesentlichen parallel.

Der Steckverbindungssatz umfasst ein Steckergehäuse, das männliche Kontakteinsätze umschließt. Die männlichen Kontakteinsätze sind beispielsweise als Kunststoffformteile mit in Steckrichtung austretenden Kontaktspitzen ausgeführt - wobei die typischerweise metallische Oberfläche der Kontaktspitzen rund, spitz, flach, konisch zulaufend oder eckig ausgeführt sein kann.

Der Steckverbindungssatz umfasst ferner ein Buchsengehäuse, das weibliche Kontakteinsätze umschließt. Die weiblichen Kontakteinsätze sind beispielsweise als Kunststoffformteile mit einem Hohlraum zur Aufnahme der Kontaktspitzen ausgeführt. Der Hohlraum weist dabei beispielsweise Leitelemente auf um einen elektrischen Kontakt zwischen weiblichen und männlichen Kontakteinsatz herzustellen.

Die weiblichen und männlichen Kontakteinsätze sind also in einem Kontaktbereich elektrisch zwischen dem Steckergehäuse und dem Buchsengehäuse miteinander verbindbar.

Der Steckverbindungssatz umfasst wenigstens zwei flexible Kabelenden - typischerweise sind diese flexiblen Kabelenden an den Stromeingangs- bzw. Stromausgangsseitigen Enden des Steckverbindungssatzes vorgesehen. Dabei ist ein flexibles Kabelende ist an das Steckergehäuse und ein flexibles Kabelende an das Buchsengehäuse angespritzt, d.h. mittels eines Spritzgussverfahrens an das Steckergehäuse bzw. Buchsengehäuse angegossen. Das flexible Kabelende ist beispielsweise an der Steckergehäuseseite mit einer Rundkabelader verbunden, an der Buchsengehäuseseite kann es entweder mit einem Rundkabel oder mit einer eine Durchgangsleitung kontaktierende Abzweigleitungsbuchse verbunden sein. Durch das vollständig ausgegossene flexible Kabelende verlaufen Kabeladern, die durch das Angießen an das Steckergehäuse bzw. Buchsengehäuse zumindest teilweise von dem flexiblen Material umschlossen sind. Die weiblichen und männlichen Kontakteinsätze sind dabei jeweils mit Kabeladern in den flexiblen Kabelenden z.B. durch Ultraschallschweißen fest verbunden.

Für den Guss wird beispielsweise ein elastisches Material verwendet um die Kabelenden flexibel zu machen. Dieses elastische Material kann auch Kunststoff mit elastischen Eigenschaften sein. Durch die Flexibilität der Kabelenden ist der Steckverbindungssatz im Bereich seiner Enden biegbar und kann daher auch für nicht geradlinige Verbindungen zweier Kabel verwendet werden - beispielsweise bei einem Kontakt bei dem zwar eine Durchgangsleitung von einer Abzweigbuchse senkrecht zur Erstreckungsrichtung der Durchgangsleitung kontaktiert wird, jedoch die so versorgte Abzweigleitung nicht senkrecht von der Durchgangsleitung weggeführt werden soll.

Das Steckergehäuse und das Buchsengehäuse sind jeweils durch Angießen von Kunststoff an einen Grundkörper mit den eingesetzten Kontakteinsätzen und daran angeschlossenen flexiblen Kabelenden hergestellt, wodurch ein massiver einstückiger Stecker bzw. eine massive einstückige Buchse gebildet wird. Dabei umfasst das Steckergehäuse einen Steckergehäuse-Grundkörper und das Buchsengehäuse einen Buchsengehäuse-Grundkörper.

Neben den flexiblen Kabelenden ist sind auch das Steckergehäuse bzw. das Buchsengehäuse selbst z.B. durch Spritzguss jeweils hergestellt; dabei ist auch das Innere der Gehäuse z.B. mittels Spritzguss vollständig ausgegossen. Der männliche und weiblichen Kontakteinsätze sind im Bereich des Steckergehäuses bzw. des Buchsengehäuse in das jeweilige Gehäuse mit eingegossen. Dadurch weisen das Steckergehäuse mitsamt angegossenem Kabelende als auch das Buchsengehäuse mitsamt angegossenem Kabelende einen Eindringschutz gegenüber Wasser bzw. Staub der Klasse IP65 auf.

Um auch den - oben erwähnten - Kontaktbereich der männlichen und weiblichen Kontakteinsätze - in dessen Bereich das Steckergehäuse und das Buchsengehäuse zusammengesteckt sind - ausreichend vor Eindringen von Wasser bzw. Staub zu schützen, umfasst der Steckverbindungssatz eine Dichthülse, welche das Steckergehäuse, das Buchsengehäuse und den Kontaktbereich zwischen den beiden Gehäusen umhüllt.

Durch die Dichthülse wird schließlich dem gesamten Steckverbindungssatz ein Schutz vor Eindringen gegenüber Staub und Wasser wenigstens der Klasse IP65, idealerweise der Klasse IP68 verliehen. Darüber hinaus bewirkt die Dichthülse einen zusätzlichen Berührschutz im speziellen für die elektrischen Kontaktstellen des Steckerverbindungssatzes um dessen Handhabung auch bei der Montage sicherer zu machen. Die Dichthülse ist beispielsweise aus Hartplastik oder anderen Kunststoffen gefertigt.

In manchen Ausgestaltungen umfasst das Material aus dem das Steckergehäuse bzw. das Buchsengehäuse gegossen ist wenigstens einen Kunststoff und das zur Bildung der flexiblen Kabelenden auf diese Gehäuse angespritzte Material umfasst wenigstens ein Elastomer.

Der angegossene Teil des Buchsengehäuses und des Steckergehäuses ist beispielsweise aus einem Polyolefin, wie Polyethylen hoher Dichte (PE-HD) hergestellt, um Stecker und. Buche mechanisch stabil zu machen, und ihnen auch die Dichtheit gegenüber Wasser bzw. Staub zu verleihen. Dabei wird an den Grundkörper, der ebenfalls aus diesem Material bestehen kann, Polyolefm-Kunststoff bzw. Polyethylen-Kunststoff angegossen. Dabei wird beispielsweise ebenfalls der Grundkörper mit eben diesen Kunststoffen ausgegossen, also mit Spritzgussmaterial aufgefüllt. Das wenigstens eine Elastomer aus dem die flexiblen Kabelenden gegossen sind ist beispielsweise ein Vulkanisat von Naturkautschuk oder Silikonkautschuk.

Durch das Angießen des flexiblen Kabelendes aus Elastomer an die aus festem, d.h. vergleichsweise wenig flexiblen, Kunststoff hergestellten Buchsengehäuse bzw. Steckergehäuse wird im Übergangsbereich zwischen den Buchsen und den an die flexiblen Kabelenden angeschlossenen Kabel bzw. Buchsen jeweils eine Art Gelenk geschaffen, um wie oben beschrieben, den Steckverbindungssatz auch für nicht geradlinige Abzweigungen verwenden zu können, bei gleichzeitiger Aufrechterhaltung eines Eindringschutzes vor Wasser bzw. Staub von mindestens IP65 in diesem Bereich.

Das Steckergehäuse bzw. Buchsengehäuse bildet gemeinsam mit den daran angegossenen flexiblen Kabelenden den massiven einstückigen Stecker bzw. die massive einstückige Buchse. Massiv bezieht sich dabei darauf, dass der Stecker bzw. die Buches durch das Angießen keine inneren Hohlräume aufweist.

In manchen Ausgestaltungen ist jeweils eine Dichtung an dem Steckergehäuse und dem Buchsengehäuse angebracht, um den Kontaktbereich vor einem Eindringen von Wasser bzw. Staub zu schützen.

Das Steckergehäuse bzw. das Buchsengehäuse werden mitsamt der Dichtung in die Dichthülse eingeführt. So sind auch die Eingangs- bzw. Ausgangsbereiche der Dichthülse, wenn das Steckergehäuse und Buchsengehäuse in die jeweiligen Öffnungen der Dichthülse eingesetzt sind, gegen Eindringen von Wasser bzw. Staub geschützt. Wasser bzw. Staub könnten ansonsten durch einen eventuell vorhandenen Zwischenraum zwischen der Dichthülse und den eingesetzten Steckergehäuse bzw. Buchsengehäuse in die Dichthülse und somit auch in Richtung des Kontaktbereichs des Steckverbindungssatzes eindringen. Wie oben erwähnt ist dieser Kontaktbereich derjenige Bereich in dem männliche und weibliche Kontakteinsätze zum Schließen des elektrischen Kontakts zwischen Buchsengehäuse und Steckergehäuse zusammengesteckt werden.

In manchen Ausgestaltungen ist die Dichtung ein Dichtring und sowohl das Steckergehäuse als auch das Buchsengehäuse weisen jeweils eine Nut an deren Außenseite zur Aufnahme des Dichtrings auf. Durch das Einlegen der Sicherungsringe in die Nut wird sichergestellt, dass die Dichtringe auch bei Einschieben der Steckergehäuse bzw. Buchsengehäuse in die Dichthülse an ihrem vorgesehenen Platz bleiben. Die Nut befindet sich in einem solchen Abstand von der der Dichthülse zugewandten Seite des Buchsengehäuses oder des Steckergehäuses, dass der Dichtring nachdem das Steckergehäuse und das Buchsengehäuse bis zum Anschlag in die Dichthülse eingeschoben ist, innerhalb der Dichthülse zu liegen kommt und den Zwischenraum zwischen Dichthülse und massivem einstückigen Stecker bzw. massiver einstückiger Buchse abdichtet.

In manchen Ausgestaltungen ist die Dichthülse an deren Innenseite in ihrem Eingangs- und Ausgangsbereich jeweils mit einem Dichtelement ausgestattet. Die Dichtelemente sitzen dann auch innerhalb der Dichthülse - und dichten ebenfalls einen Zwischenraum zwischen Steckergehäuse und Buchsengehäuse und Dichthülse - wenn die Gehäuse in die Dichthülse eingesetzt sind. Bei dieser Ausgestaltung müssen das Steckergehäuse bzw. das Buchsengehäuse nicht mit einem Dichtelement bestückt werden sondern werden in eine bereits mit an deren Ein und Ausgang mit Dichtelementen versehene Dichthülse eingesetzt.

In manchen Ausgestaltungen ist das in die Dichthülse eingesetzte Dichtelement ein Dichtring und die Dichthülse weist eine Nut in ihrem Eingangs- und Ausgangsbereich zur Aufnahme des Dichtrings auf.

Beide Varianten weisen einen äquivalenten Schutz vor Eindringen von Wasser bzw. Staub auf.

In manchen Ausgestaltungen weist die Dichthülse eine Verriegelung auf mit der sie an dem Buchsengehäuse oder an dem Steckergehäuse oder an beiden fixiert werden kann. Dadurch ist sichergestellt, dass die Dichthülse zumindest in einer Richtung in seiner Position nach Herstellen einer Steckverbindung zwischen dem Steckergehäuse bzw. der sich darin befindlichen männlichen Kontakteinsätze und dem Buchsengehäuse bzw. der sich darin befindlichen weiblichen Kontakteinsätze nicht mehr verrutschen kann.

Dadurch wird der Kontaktbereich des Steckverbinders auch bei Ausüben von Zugkraft in einer bestimmten Richtung nicht freigegeben. Dies dient einerseits dem Eindringschutz vor Wasser bzw. Staub, andererseits der Sicherheit, da die Dichthülse nicht durch einen ungeschickten Handgriff abgelöst werden kann und den Kontaktbereich freigibt - sondern nur nach bewusstem Lösen der Verriegelung abgezogen werden kann.

In manchen Ausgestaltungen ist die Verriegelung dabei als an einem Ende der Dichthülse angebrachtes Schnappsystem ausgeführt ist das an einer Lasche am Steckergehäuse oder am Buchsengehäuse einrasten kann.

Das Elastomer oder der elastische Kunststoff, das bzw. der zur Formung der angespritzten Kabelenden an den die Gehäuse gespritzt wird, kann das Buchsengehäuse bzw. das Steckergehäuse auch teilweise oder ganz umschließen. An den Stellen, an denen die oben erwähnte(n) Lasche(n) zur Befestigung der Dichthülse an wenigstens einem der Gehäuse vorgesehen ist, ist beispielsweise kein Elastomer aufgetragen, sodass das Schnappsystem in die Laschen einrasten kann. Das Schnappsystem kann durch Schnappeinsätze aus Kunststoff realisiert sein, die im zusammenpressten Zustand in die Laschen gesteckt werden und sich dann wieder ausdehnen um die Einsätze in der Lasche zu fixieren.

In manchen Ausgestaltungen sind die männlichen bzw. weiblichen Kontakteinsätze aus Metall sind und durch Ultraschallschweißen mit Kabeladern fest verbunden. Die weiblichen bzw. männlichen Kontakteinsätze können mittels eines in dem Steckergehäuse bzw. Buchsengehäuse vorgesehenen Schnappsystems in einer Kontaktposition in dem Steckergehäuse bzw. dem Buchsengehäuse einrasten. Die männlichen bzw. weiblichen Kontakteinsätze sind in einer Kontaktposition, wenn sie soweit aus dem Steckergehäuse bzw. dem Buchsengehäuse herausragen, dass bei Zusammenstecken der Steckergehäuse und der Buchsengehäuse (im inneren der Dichthülse), also dem Herstellen des elektrischen Kontakts, der männliche Kontakteinsatz bis zu einem Anschlag in dem weiblichen Kontakteinsatz eindringt.

Durch das Einrasten der Kontakteinsätze sind diese sowohl beim Vorgang des Zusammensteckens an dem jeweiligen Steckergehäuse oder Buchsengehäuse fixiert, sodass sie dabei nicht entgegen der Steckrichtung zurückweichen können.

Der Steckverbindungssatz umfasst einen zwischen Buchsengehäuse und Steckergehäuse platzierten Sicherungsblock mit wenigstens einem Sicherungshalter und wenigstens einem Sicherungseinsatz für wenigstens eine abgesicherte Ader und elektrische Kontaktstellen für nicht abgesicherte Adern. Der Sicherungsblock bildet praktisch den Kontaktbereich in dem die weiblichen mit den männlichen Kontakteinsätzen verbunden werden.

Der Sicherungsblock kann dabei als eine Kunststoff-Formteil ausgeführt werden, der Sicherungshalter für beispielsweise Stecksicherungen für abgesicherte Adern umfasst - in welche die Kontakteinsätze eingesteckt werden können und durchleitende Elemente zu welchen die Kontakteinsätze der nicht abgesicherten Adern miteinander verbunden werden können.

So können z.B. für alle zu phasenleitenden Adern der zu verbindenden Leitung verbundene Kontakteinsätze jeweils ein Sicherungshalter, beispielsweise umfassend zwei Sicherungsteller zum Kontaktieren der Sicherungen, und ein Sicherungseinsatz, ausgeführt als Stecksicherung vorgesehen sein, während für zu Neutralleiter bzw. Schutzleiter verbundene Kontakteinsätze durchleitende Elemente vorgesehen sind, welche die Kontakteinsätze an ihren jeweiligem Ende aufnehmen. Ein zu einer abgesicherten Ader verbundener weiblicher Kontakteinsatz kann dabei statt mit einem oben beschriebenen Hohlraum zur Aufnahme des männlichen Kontakteinsatzes an seiner Spitze mit einem Sicherungsteller zum Kontaktieren einer Stecksicherung ausgestaltet sein.

Ein zu einer abgesicherten Ader verbundener männliche Kontakteinsatz kann als zur Kontaktierung eines Sicherungstellers vorgesehener Kontaktstift ausgeführt sein, der beim Zusammenstecken einen in dem Sicherungsblock bereits vorhandenen Sicherungsteller kontaktiert.

Der Sicherungshalter kann zum Wechseln der Sicherung nur auf der Seite des Buchsengehäuses demontiert werden. Die Demontage des Sicherungshalter erfolgt dabei beispielsweise nach Herausziehen des Buchsengehäuses samt weiblicher Kontakteinsätze, wobei dadurch, in Ausgestaltungen an denen der weibliche Kontakteinsatz selbst einen Sicherungsteller aufweist die Sicherungseinsätze, bereits zum Auswechseln freiliegen.

In Ausgestaltungen in denen die durchleitenden Elemente im Sicherungsblock Sicherungsteller zur Aufnahme der Sicherung aufweisen und das weibliche Kontaktelement zu solchen durchleitenden Elementen verbunden ist, muss vor Wechseln der Sicherung nach Abziehen des Buchsengehäuses auch noch der buchsenseitige Teil der durchleitenden Elemente abgezogen werden.

In manchen Ausgestaltungen weist die Dichthülse einen Anschlag für das Steckergehäuse auf, damit der Sicherungswechsel nur stromlos durchgeführt werden kann. Wenn der Sicherungsblock aus der Dichthülse herausgelöst wird um die Sicherung zu wechseln, kann durch den Anschlag in der Dichthülse das Steckergehäuse nicht mitgezogen werden bzw. nachrutschen, wodurch beim Herausziehen des Sicherungsblocks die elektrische Verbindung zwischen den Kontakteinsätzen des Steckergehäuses und dem Sicherungshalter im Sicherungsblock getrennt wird. Es ist so sichergestellt, dass beim Wechseln der Sicherung kein Strom mehr durch die Sicherungseinsätze fließt.

Ein anderer Aspekt betrifft einen Installationssatz mit wenigstens einem Flachkabel, wenigstens einem Steckverbindungssatz gemäß dem ersten Aspekt, wenigstens einer Abzweigleitung.

Ein weiterer Aspekt betrifft eine elektrische Installation, welche eine als Flachkabel ausgeführte Durchgangsleitung umfasst und wenigstens einen Steckverbindungssatz gemäß dem ersten Aspekt, sowie wenigstens eine durch jeweils einen Steckverbindungssatz mit dem Flachkabel verbundene Abzweigleitung.

### KURZE BESCHREIBUNG DER ZEICHNUNG

Die angefügte Zeichnung veranschaulicht beispielhafte Ausführungsformen der verschiedenen Aspekte der Erfindung. In der Zeichnung zeigen:
- Fig. 1 schematisch eine Verbindung eines Rundkabels mit einem Flachkabel durch eine Steckverbindung mit flexiblen Kabelende,
- Fig. 2 eine schematische Rückenansicht eines Steckergehäuses mit Dichtringnut, ohne eingesetzte Kontakteinsätze,
- Fig. 3 eine Explosionsansicht einer Steckverbindung mit einer Dichthülse und weiblichen und männlichen Kontakteinsätzen in der ein Steckergehäuse und ein Buchsengehäuse jeweils in einer Nut einen Dichtring tragen
- Fig. 4 eine schematische Darstellung des Steckerverbindungsausschnitts aus Fig. 3 in zusammengesetztem Zustand
- Fig. 5 eine Explosionsansicht einer Dichthülse mit einem in einer Eingangsseitigen zw. Ausgangsseitigen Nut eingelegten Dichtring mit beidseitigen Verschlussstopfen zur Fixierung dieses Dichtrings
- Fig. 6 eine Explosionsansicht eines Steckverbindungsausschnitts mit Dichthülse mit innen liegenden Dichtring und beidseitig verbundenen Verschlussstopfen
- Fig. 7 die Steckverbindungsausschnitt aus Fig. 7 im zusammengesetzten Zustand
- Fig. 8 eine schematische Schnittansicht eines Steckverbindungsausschnitts mit darin eingesetzten Sicherungsblock zum Absichern der Verbindung zweier Phasenleiter
- Fig. 9 eine schematische Draufsicht auf eine Steckverbindungsausschnitt gemäß Figuren 3 bis 8, mit beidseitig angespritzten flexiblen Kabelenden.

Die Zeichnung und die Beschreibung der Zeichnung beziehen sich auf Beispiele der Erfindung und nicht auf die Erfindung selbst.

### BESCHREIBUNG VON AUSFÜHRUNGSBEISPIELEN ANHAND DER ZEICHNUNG

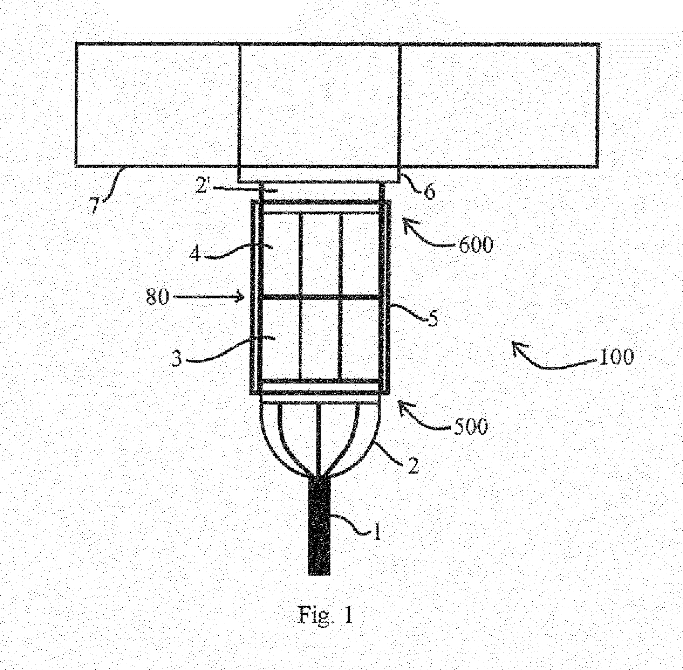

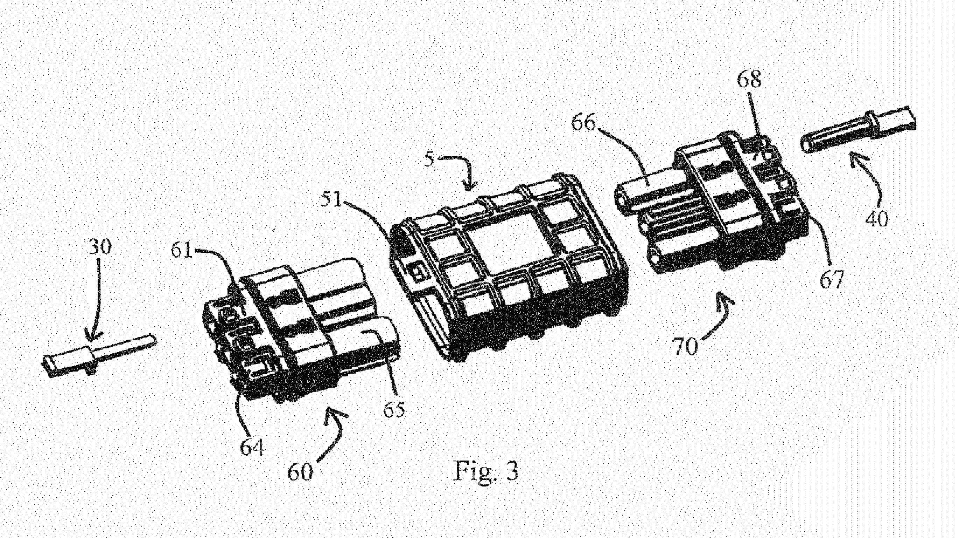

Der Steckverbindungssatz gemäß **Fig.1** verbindet ein mehradriges Flachkabel 7 mit einem mehradrigen Rundkabel 1. Die Adern des Flachkabels werden dabei von einer Anschlussvorrichtung 6 angezapft und der Strom kann durch Leitelemente innerhalb der Anschlussvorrichtung 6 in eine an die Anschlussvorrichtung verbundene Buchse fließen. Die Buchse hat ein Buchsengehäuse 4, welcher ein Teil des beschriebenen Steckverbindungssatzes 100 ist. Die Buchse ist mit weiblichen Kontakteinsätzen 40 ausgestattet (siehe Fig, 3) welche von dem Buchsengehäuse 4 umschlossen sind.. In die weiblichen Kontakteinsätze 40 des Buchsensengehäuses 4 sind männliche Kontakteinsätze 30 (siehe Fig. 3) eines Steckers an der Verbindungsstelle zwischen Stecker und Buchse eingesteckt. Diese Stelle, an der die männlichen und weiblichen Kontakteinsätze 30, 40 ineinander greifen, bildet somit einen Kontaktbereich 80.

Genau wie die weiblichen Kontakteinsätze 40 sind die männlichen Kontakteinsätze 30 von einem Steckergehäuse 3, umschlossen. Das Buchsengehäuse 4 und das Steckergehäuse 3 sind in eine Dichthülse 5 eingebettet um den Kontaktbereich 80 vor Eindringen von Wasser bzw. Staub zu schützen. An das Steckergehäuse 3 und das Buchsengehäuse 4 jeweils sind zugehörige flexible Kabelenden 2, 2' bestehend aus einem Elastomer oder Kunststoff mit elastischen Eigenschaften angespritzt. Die Kabeladern 1' des Rundkabels 1 sind dabei durch das flexible Kabelende 2 geführt und sind mit den männlichen Kontakteinsätzen 30 des Steckergehäuses 3 verbunden.

Zusammen mit dem flexiblen Kabelende 2 bildet das Steckergehäuse 3 den massiven Stecker 500. Zusammen mit dem flexiblen Kabelende 2' bildet das Buchsengehäuse 4 die massive Buchse 600.

Sowohl das Steckergehäuse 3, als auch das Buchsengehäuse 4 sind durch Spritzguss mittels angießen von Kunststoff an einen Grundkörpers 60 (siehe Fig. 3), was das vollständige Ausgießen des Grundkörpers 60 umfassen soll, hergestellt. Dies bietet zusätzlichen Schutz vor Eindringen von Wasser bzw. Staub in Richtung in das Innere des Steckverbindungssatzes 100.

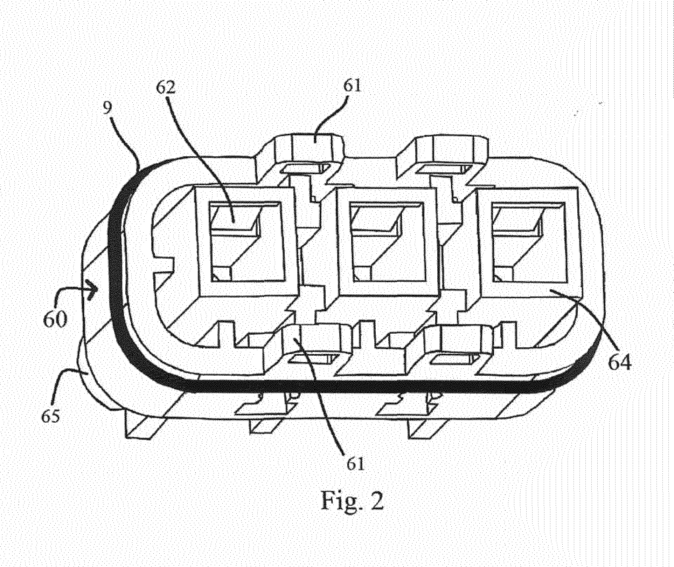

Das Steckergehäuse bzw. Buchsengehäuse umfasst einen in Fig. 2 dargestellten Grundkörper 60 mit rechteckigen Aufnahmen für die Kontakteinsätze 64 und aus diesen Aufnahmen 64 an die sich in Fig. 2 nur angedeutete runde Führungsröhren 65 zur Führung der Kontaktspitze eines männlichen Kontakteinsatzes 3 anschließen. Die Aufnahmen mit rechtwinkligem Querschnitt 64 sind an ihren rückseitigen Öffnungen (den Öffnungen in denen die männlichen Kontakteinsätze 30 (hier nicht dargestellt) in das Steckergehäuse 3 eingeführt werden mit einem Schnappsystem 2 versehen, in das die männlichen Kontakteinsätze 30 (hier nicht dargestellt) in einer bestimmten Position einrasten können.

Darüber hinaus ist der Grundkörper 60 mit Laschen 61 ausgestattet, die an den seiner Ober- und Unterseite seiner Vorderfront aus ihm heraustreten. Diese Laschen 61 sind als Teil eines Schnappsystems vorgesehen, das der Verriegelung der Dichthülse 5 (siehe Fig. 3) in einer bestimmten Position an dem Steckergehäuse 3 dient.

Der Grundkörper 60 ist an seiner Außenseite mit einer Nut versehen, um einen Dichtring 9 aus Gummi aufzunehmen. Der Dichtring 9 soll verhindern, dass, wenn das Steckergehäuse 3 in die in Fig. 2 nicht dargestellte Dichthülse 5 eingesetzt ist, Wasser entlang des Steckergehäuses 3 in das Innere der Steckverbindung fließt.

Der gesamte Steckverbindungssatz 100, ist in **Fig. 3** in einer Explosionsansicht dargestellt. männliche Kontakteinsätze 30 werden bei der Herstellung des Steckers durch die rechteckigen Aufnahmen 64 des Grundkörpers 60 geschoben und dann in einer Position fixiert in der sie mit ihrer Spitze aus den Führungsröhren 65 hinausragen. Ebenso werden die weiblichen Kontakteinsätze 40 durch Aufnahmen mit rechtwinkligem Querschnitt 67 geführt und durch in Fig. 3 nicht dargestellte Schnappeinsätze in einer Position fixiert in der Ihre Spitze aus Führungsröhren 66 herausragt. Die weiblichen Kontakteinsätze verfügen in Ihrer Spitze über einen Hohlraum in den sie die Kontaktspitzen der männlichen Kontakteinsätze aufnehmen können. Durch Angießen des Kunststoffs an den Grundkörper wird das Steckergehäuse 3 bzw. das Buchsengehäuse 4 hergestellt, das die männlichen 30 bzw. weiblichen Kontakteinsätze 40 umschließt.

Sowohl der Steckergehäuse 3 als auch das Buchsengehäuse 4 (siehe Fig. 1) sind mit Nuten versehen an der Oberseite ihres jeweiligen Grundkörpers 60 bzw. 70, in die jeweils ein Dichtring 9, 9' eingesetzt ist. Sowohl das Buchsengehäuse 4 als auch das Steckergehäuse 3 werden in die Dichthülse 5 eingeschoben, sodass die in die jeweiligen Gehäuse eingesetzten weiblichen bzw. männlichen Kontakteinsätze einander kontaktieren. In dieser Position wird die Dichthülse 5 über ein Schnappsystem bestehend aus einer Lasche 61 an dem Steckergehäuse 3 und einem Klipselement 51 an der Seite der Dichthülse 5 in die das Steckergehäuse eingesetzt werden soll, fixiert.

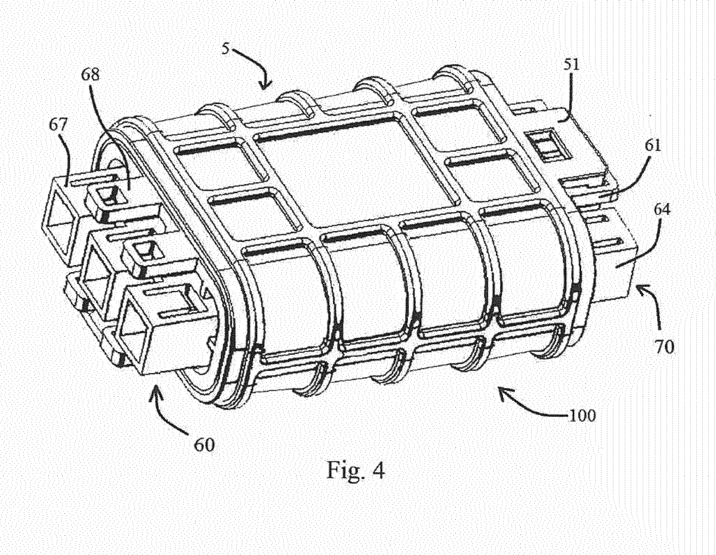

Der Steckverbindungssatz 100 ist in **Fig. 4** im zusammengesetzten Zustand - jedoch ohne angegossenen_Kunststoff - dargestellt. Die einzigen Elemente die aus der Dichthülse 5 herausragen sind die Aufnahmen mit rechteckigem Querschnitt 64, 63 des Steckergehäuses 3 bzw. des Buchsengehäuses 4 sowie die aus diesen heraustretenden Laschen 61, 68, wobei in die Lasche 61 des Steckergehäuses das Klipselement 51 der Dichthülse eingerastet ist.

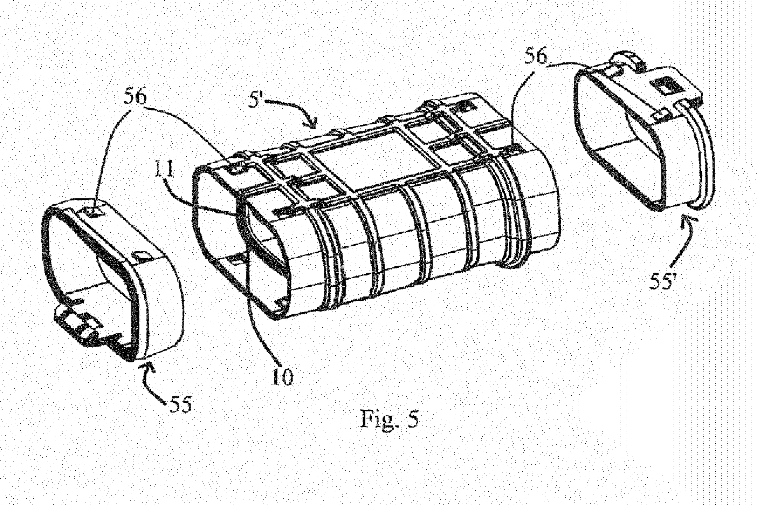

Eine andere Ausgestaltung einer Dichthülse 5' ist in **Fig. 5** in einer Explosionsansicht dargestellt. Die Dichthülse 5' weist im Gegensatz zu der in den bisherigen Figuren gezeigten Dichthülse 5 (siehe Fig. 3) eine Nut 11 zur Aufnahme eines Dichtrings 10 (beispielsweise aus Gummi) in ihren Eingangs bzw. Ausgangsbereichen auf. Zur Fixierung der Dichtringe 10, von denen in der schematischen Darstellung in Fig. 5 nur einer dargestellt ist, umfasst die Dichthülse 5' auch Eingangs- bzw. Ausgangsseitigen Verschlussstopfen 55, 55', die mittels jeweils zugeordneter Einrastsysteme 56, 56' am Eingang bzw. Ausgang der Dichthülse 5' ebenso fixiert werden können,

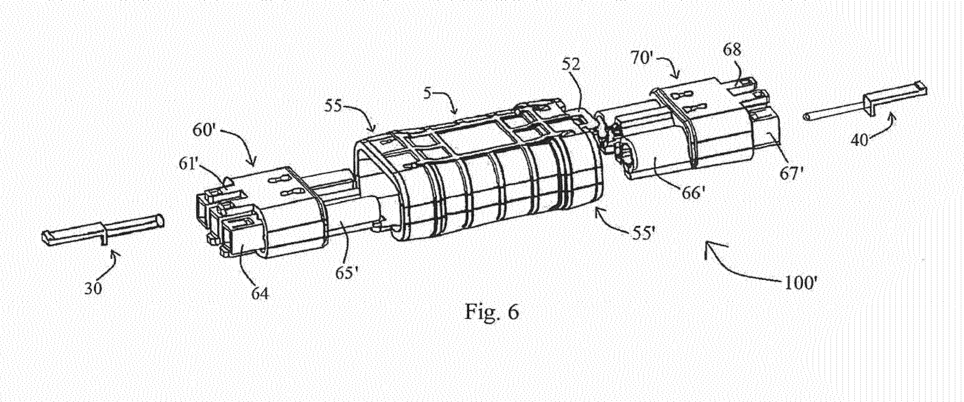

In **Fig. 6** ist die Dichthülse 5' mit eingelegten Dichtringen 10 (in Fig. 6 nicht dargestellt) in einer Explosionsansicht mit den anderen Teilen eines Steckverbindungssatzes 100' dargestellt. Die weiblichen bzw. männlichen Kontakteinsätze 30, 40 sind identisch zu denen in Fig. 3 gezeigten. Jedoch unterscheiden sich die Grundkörper 60', 70' bzw. die diese umfassenden Steckergehäuse 3' bzw. Buchsengehäuse 4' von denen der Fig. 3 dadurch, dass an deren Oberseite keine Dichtringe 9 eingesetzt sind. Die Funktion dieser Dichtringe übernehmen in dieser Ausgestaltung der Dichthülse 5' die am Eingang bzw. Ausgang der Dichthülse 5' platzierten Dichtringe 10. Dadurch müssen keine Dichtringe 9, 9' auf den Gehäusen platziert werden.

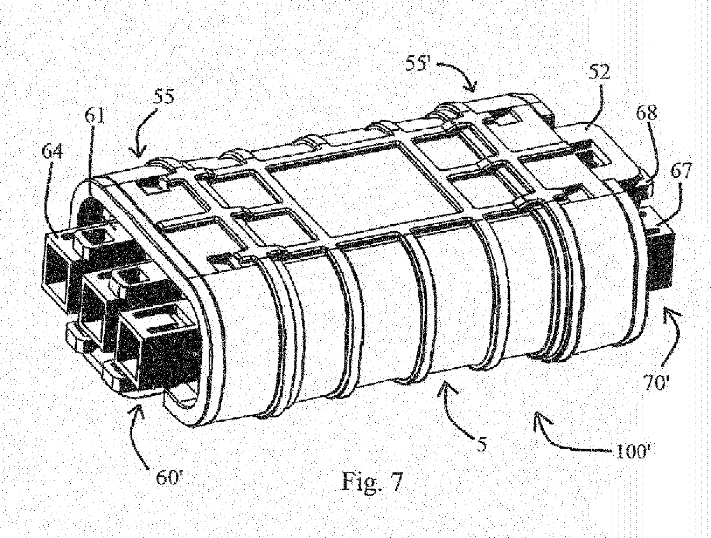

Der Steckverbindungssatz 100' ist in **Fig. 7** im zusammengesetzten Zustand - jedoch ohne angegossenen Kunststoff - gezeigt. Der Steckverbindungssatz 100' ist bis auf die Verwendung der in Fig. 4 und Fig. 5 dargestellten Dichthülse 5' anstatt der in Fig. 3 dargestellten Dichthülse 5 praktisch identisch zu dem Steckverbindungssatz 100 der in Fig. 3 in einer Explosionsansicht dargestellt ist.

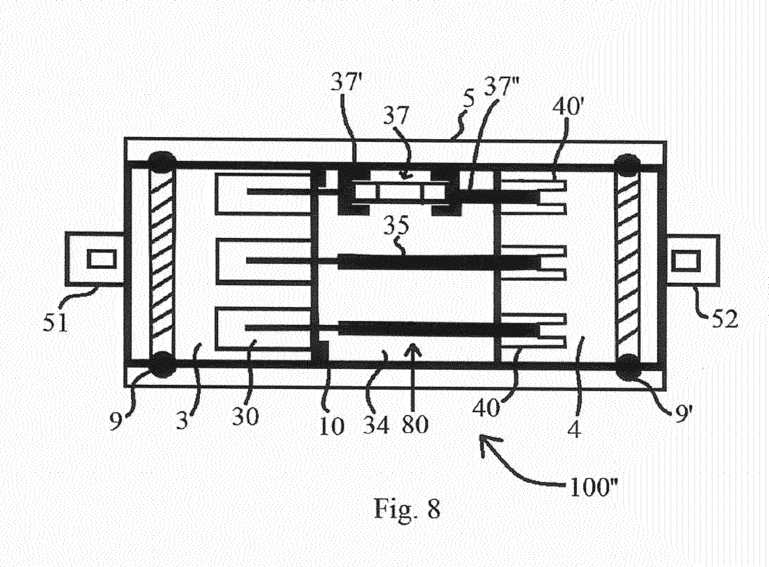

Als Ergänzung zu den bisher gezeigten Ausgestaltungen ist bei der in **Fig. 8** gezeigten Ausgestaltung ein Sicherungsblock 34 zwischen dem Steckergehäuse 3 und dem Buchsengehäuse 4 vorgesehen. Der Sicherungsblock 34 umfasst drei durchleitende Elemente 35. Ein durchleitendes Element das weibliche 40 bzw. männliche Kontaktelemente 30 kontaktiert, welche eine phasenleitende Ader verbunden werden soll ist als eine Sicherungsbuchse mit Sicherungstellern 37' bzw. 37" jeweils auf Steckerseite bzw. Buchsenseite ausgestattet. In diese durch die Sicherungsteller 37', 37" gebildete Sicherungsbuchse ist ein Sicherungseinsatz 37, beispielsweise eine Überstromsicherung, eingesetzt.

Die Kontaktspitzen der männlichen Kontaktelemente 30 welche zu neutralleitenden Adern oder Sicherungsleiter-Adern (nicht spannungsführend) verbunden sind dringen in die durchleitenden Elemente 35 ohne Sicherungsteller ein. Diese durchleitenden Elemente 35 dringen wiederum an deren entgegengesetzten Ende in weibliche Kontaktelemente 40 ein. Die Verbindungselemente 35 bilden somit einen Kontaktbereich 80 zwischen Steckergehäuse 3 und Buchsengehäuse 4.

In der in Fig. 8 dargestellten Ausgestaltung ist eine Variante der Steckverbindung gewählt, in der die Dichtringe 9, 9' in Nuten an der Außenfläche des Steckergehäuses bzw. des Buchsengehäuses sitzen und nicht bereits in die Dichthülse 5 (siehe Fig. 3) eingesetzt sind. Die Dichthülse ist mit Klipselementen 51, 52 an beiden Seiten ausgestattet.

Der Fachmann versteht jedoch, dass in dem in der in Fig. 8 skizzierten Ausgestaltung des Steckverbindungssatzes 100" auch die Dichthülse 5' (siehe Fig. 5) gewählt sein kann, bei der die Dichtringe 10 (in Fig. 8 nicht dargestellt) an den Ein- bzw. Ausgängen der Dichthülse eingesetzt sind.

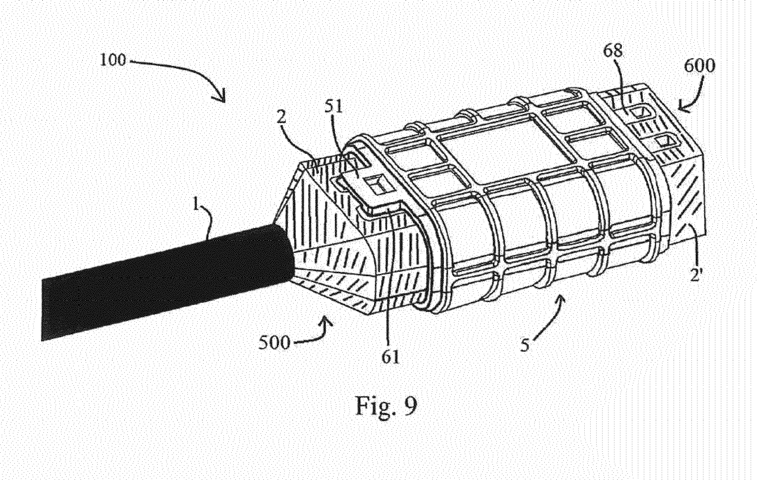

Der in **Fig. 9** dargestellte Steckverbindungssatz 100, welcher vom Aufbau her dem Steckverbindungssatz 100 gemäß der Explosionsansicht aus Fig. 3 entspricht, Grundkörper 60, 70 mit bereits angegossenem Kunststoff aufweisen die so ein Steckergehäuse 3, bzw. ein Buchsengehäuse 4 bilden weist zwei flexible Kabelenden auf, nämlich ein buchsenseitiges flexibles Kabelende 2' und ein steckerseitiges flexibles Kabelende 2. Die Kabelenden wurden durch Anspritzung bzw. Umspritzung des Steckergehäuses 3 (in Fig. 9 nicht sichtbar) bzw. des Buchsengehäuses 4 (ebenfalls in Fig. 9 nicht sichtbar) mit einem Elastomer hergestellt.

Der Fachmann versteht auch hier, dass anstatt der in Fig. 9 gezeigten Dichthülse 5 (siehe Fig. 3) auch die Dichthülse 5' (siehe Fig. 5) gewählt sein kann. Auch kann anstatt der Ausgestaltung des Steckverbindungssatzes 100 gemäß Fig. 3 - ohne Sicherungsblock zwischen Steckergehäuse und Buchsengehäuse - auch ein Steckverbindungssatz 100" gemäß Fig. 8 - mit Sicherungsblock zwischen Steckergehäuse und Buchsengehäuse - gewählt sein.

## Patentansprüche

1. Steckverbindungssatz (100) zum Verbinden einer Abzweigleitung mit einer Durchgangsleitung, umfassend:
ein Steckergehäuse (3),
ein Buchsengehäuse (4),
wenigstens zwei flexible Kabelenden (2, 2'), wobei ein flexibles Kabelende (2, 2') an das Steckergehäuse (3) und ein flexibles Kabelende (2, 2') an das Buchsengehäuse (4) angespritzt ist,
wobei das Steckergehäuse (3) und das Buchsengehäuse (4) jeweils durch Angießen von Kunststoff an einen Grundkörper (60) mit eingesetzten Kontakteinsätzen (64) und daran angeschlossenen flexiblen Kabelenden (2, 2') hergestellt ist, wodurch ein massiver einstückiger Stecker (500) bzw. eine massive einstückige Buchse (600) gebildet ist,
eine Dichthülse (5), welche das Steckergehäuse (3), das Buchsengehäuse (4) und den Kontaktbereich zwischen den beiden Gehäusen (3, 4) umhüllt, um den Steckverbindungssatz (100) vor einem Eindringen von Wasser und/oder. Staub zu schützen,
**dadurch gekennzeichnet, dass**
das Steckergehäuse (3) männliche Kontakteinsätze (30) umschließt,
das Buchsengehäuse (4) weibliche Kontakteinsätze (40) umschließt,
wobei die weiblichen und männlichen Kontakteinsätze (40, 30) jeweils mit Kabeladern (1, 1') in den flexiblen Kabelenden (2, 2') fest verbunden sind,
wobei die weiblichen und männlichen Kontakteinsätze (40, 30) in einem Kontaktbereich (80) elektrisch zwischen dem Steckergehäuse (3) und dem Buchsengehäuse (4) miteinander verbindbar sind,
wobei der Steckverbindungssatz (100) einen in dem Kontaktbereich (80) platzierten Sicherungsblock (34) mit wenigstens einem Sicherungshalter und wenigstens einem Sicherungseinsatz (37, 37', 37") für wenigstens eine abgesicherte Ader und elektrische Kontaktstellen für nicht abgesicherte Adern umfasst,
wobei der Sicherungshalter zum Wechseln der Sicherung nur auf der Seite des Buchsengehäuses (4) demontiert werden kann.

2. Steckverbindungssatz (100) nach Anspruch 1, wobei das Material, aus dem das Steckergehäuse (3) bzw. Buchsengehäuse (4) gegossen ist, wenigstens einen Kunststoff umfasst und das zur Bildung der flexiblen Kabelenden (2, 2') auf diese Gehäuse angespritzte Material wenigstens ein Elastomer umfasst.

3. Steckverbindungssatz (100) nach Anspruch 1 oder 2, wobei jeweils eine Dichtung an dem Steckergehäuse und dem Buchsengehäuse angebracht sind, um den Kontaktbereich (80) vor einem Eindringen von Wasser bzw. Staub zu schützen.

4. Steckverbindungssatz (100) nach Anspruch 3, wobei die Dichtung ein Dichtring (9) ist und sowohl das Steckergehäuse (3) als auch das Buchsengehäuse (4) jeweils eine Nut an deren Außenseite zur Aufnahme des Dichtrings (9) aufweisen.

5. Steckverbindungssatz (100) nach Anspruch 1 oder 2, wobei die Dichthülse (5) an deren Innenseite in ihrem Eingangs- und Ausgangsbereich jeweils mit einem Dichtelement ausgestattet ist.

6. Steckverbindungssatz (100) nach Anspruch 5, wobei das Dichtelement ein Dichtring (9) ist und die Dichthülse (5) eine Nut in ihrem Eingangs- und Ausgangsbereich zur Aufnahme des Dichtrings (9) aufweisen.

7. Steckverbindungssatz (100) nach einem der Ansprüche 1 bis 6, wobei die Dichthülse (5) eine Verriegelung aufweist, mit dem sie an dem Buchsengehäuse (4) oder an dem Steckergehäuse (3) oder an beiden fixiert werden kann.

8. Steckverbindungssatz (100) nach Anspruch 7, wobei die Verriegelung als an einem Ende der Dichthülse (5) angebrachtes Schnappsystem ausgeführt ist, das einer Lasche am Steckergehäuse (3) oder am Buchsengehäuse (4) einrasten kann.

9. Steckverbindungssatz nach einem der Ansprüche 1 bis 8, wobei die männlichen bzw. weiblichen Kontakteinsätze (30, 40) aus Metall sind und durch Ultraschallschweißen mit Kabeladern (1, 1') fest verbunden sind.

10. Steckverbindungssatz nach einem der Ansprüche 1 bis 9, wobei die weiblichen bzw. männlichen Kontakteinsätze (40, 30) mittels eines in dem Steckergehäuse bzw. Buchsengehäuse (3, 4) vorgesehenen Schnappsystems in einer Kontaktposition in dem Steckergehäuse (3) bzw. dem Buchsengehäuse (4) einrasten können.

11. Steckverbindungssatz nach Anspruch 10, wobei die Dichthülse (5) einen Anschlag für das Steckergehäuse (3) aufweist, damit der Sicherungswechsel nur stromlos durchgeführt werden kann.

12. Installationssatz mit
- wenigstens einem Flachkabel,
- wenigstens einem Steckverbindungssatz (100) nach einem der Ansprüche 1 bis 11,
- wenigstens einer Abzweigleitung.

13. Elektrische Installation, umfassend:
- eine als Flachkabel ausgeführte Durchgangsleitung
- wenigstens einen Steckverbindungssatz (100) nach einem der Ansprüche 1 bis 11,
- wenigstens eine durch jeweils einen Steckverbindungssatz (100) mit dem Flachkabel verbundene Abzweigleitung.

## Claims

1. Plug-in connection kit (100) for connecting a branch line to a passage line, comprising:
a plug housing (3),
a socket housing (4),
at least two flexible cable ends (2, 2'), wherein one flexible cable end (2, 2') is injection-moulded onto the plug housing (3) and one flexible cable end (2, 2') is injection-moulded onto the socket housing (4),
wherein the plug housing (3) and the socket housing (4) are each produced by casting plastic onto a main body (60) with inserted contact inserts (30, 40) and flexible cable ends (2, 2') which are connected thereto, as a result of which a solid one-piece plug (500) and, respectively, a solid one-piece socket (600) are formed, a sealing sleeve (5) which encases the plug housing (3), the socket housing (4) and the contact region between the two housings (3, 4) in order to protect the plug-in connection kit (100) against the ingress of water and/or dust,
**characterized in that**
the plug housing (3) encloses male contact inserts (30), the socket housing (4) encloses female contact inserts (40),
wherein the female and male contact inserts (40, 30) are each fixedly connected to cable cores (1, 1') in the flexible cable ends (2, 2'),
wherein the female and male contact inserts (40, 30) can be electrically connected to one another between the plug housing (3) and the socket housing (4) in a contact region (80),
wherein the plug-in connection kit (100) comprises a fuse block (34) which is positioned in the contact region (80) and has at least one fuse holder and at least one fuse insert (37, 37', 37") for at least one fused core and electrical contact points for non-fused cores,
wherein the fuse holder can be removed only on the socket housing (4) side for the purpose of replacing the fuse.

2. Plug-in connection kit (100) according to Claim 1, wherein the material from which the plug housing (3) and, respectively, socket housing (4) are cast comprises at least one plastic and the material which is injection-moulded onto these housings for forming the flexible cable ends (2, 2') comprises at least one elastomer.

3. Plug-in connection kit (100) according to Claim 1 or 2, wherein in each case one seal is fitted to the plug housing and to the socket housing in order to protect the contact region (80) against the ingress of water and/or dust.

4. Plug-in connection kit (100) according to Claim 3, wherein the seal is a sealing ring (9) and both the plug housing (3) and also the socket housing (4) each have a groove on their outer side for the purpose of receiving the sealing ring (9).

5. Plug-in connection kit (100) according to Claim 1 or 2, wherein the sealing sleeve (5) is equipped with a respective sealing element on the inner side of the said sealing sleeve in its input and output region.

6. Plug-in connection kit (100) according to Claim 5, wherein the sealing element is a sealing ring (9) and the sealing sleeve (5) has a groove in its input and output region for the purpose of receiving the sealing ring (9).

7. Plug-in connection kit (100) according to one of Claims 1 to 6, wherein the sealing sleeve (5) has a locking arrangement by way of which it can be fixed to the socket housing (4) or to the plug housing (3) or to both.

8. Plug-in connection kit (100) according to Claim 7, wherein the locking arrangement is embodied as a snap-action system which is fitted to one end of the sealing sleeve (5) and can latch into a lug on the plug housing (3) or on the socket housing (4).

9. Plug-in connection kit according to one of Claims 1 to 8, wherein the male and, respectively, female contact inserts (30, 40) are composed of metal and are fixedly connected to cable cores (1, 1') by ultrasonic welding.

10. Plug-in connection kit according to one of Claims 1 to 9, wherein the female and, respectively, male contact inserts (40, 30) can latch into the plug housing (3) and, respectively, the socket housing (4) in a contact position by means of a snap-action system which is provided in the plug housing and, respectively, socket housing (3, 4).

11. Plug-in connection kit according to Claim 10, wherein the sealing sleeve (5) has a stop for the plug housing (3), so that the fuse can be replaced only in the absence of current.

12. Installation kit comprising
- at least one flat cable,
- at least one plug-in connection kit (100) according to one of Claims 1 to 11,
- at least one branch line.

13. Electrical installation comprising:
- a passage line which is embodied as a flat cable,
- at least one plug-in connection kit (100) according to one of Claims 1 to 11,
- at least one branch line which is connected to the flat cable by in each case one plug-in connection kit (100) .

## Revendications

1. Kit de connexion enfichable (100) pour la connexion d'une dérivation à une ligne de passage, comprenant :
un boîtier de fiche (3),
un boîtier de douille (4),
au moins deux extrémités de câble flexibles (2, 2'), dans lequel une extrémité de câble flexible (2, 2') est moulée par injection sur le boîtier de fiche (3) et une extrémité de câble flexible (2, 2') sur le boîtier de douille (4),
dans lequel le boîtier de fiche (3) et le boîtier de douille (4) sont fabriqués respectivement par coulée de matière plastique sur un corps de base (60) avec des inserts de contact (30, 40) insérés et les extrémités de câble flexibles (2, 2') raccordées à ceux-ci, ce qui a pour effet qu'une fiche d'une seule pièce monobloc (500) ou une douille d'une seule pièce monobloc (600) est formée,
un manchon d'étanchéité (5), lequel enveloppe le boîtier de fiche (3), le boîtier de douille (4) et la zone de contact entre les deux boîtiers (3, 4), afin de protéger le kit de connexion enfichable (100) d'une pénétration d'eau et/ou de poussière,
**caractérisé en ce que**
le boîtier de fiche (3) entoure des inserts de contact mâles (30),
le boîtier de douille (4) entoure des inserts de contact femelles (40),
dans lequel les inserts de contact femelles et mâles (40, 30) sont connectés fixement respectivement à des fils de câble (1, 1') dans les extrémités de câble flexibles (2, 2'),
dans lequel les inserts de contact femelles et mâles (40, 30) dans une zone de contact (80) peuvent être connectés électriquement les uns aux autres entre le boîtier de fiche (3) et le boîtier de douille (4),
dans lequel le kit de connexion enfichable (100) comprend un bloc de fusible (34), placé dans la zone de contact (80), avec au moins un porte-fusible et au moins une cartouche fusible (37, 37', 37'') pour au moins un fil protégé et des points de contact électriques pour des fils non protégés,
dans lequel le porte-fusible peut être démonté pour le changement du fusible uniquement sur le côté du boîtier de douille (4).

2. Kit de connexion enfichable (100) selon la revendication 1, dans lequel le matériau à partir duquel le boîtier de fiche (3) ou le boîtier de douille (4) est coulé comprend au moins une matière plastique et le matériau moulé par injection sur ce boîtier pour la formation des extrémités de câble flexibles (2, 2') comprend au moins un élastomère.

3. Kit de connexion enfichable (100) selon la revendication 1 ou 2, dans lequel respectivement un joint est appliqué sur le boîtier de fiche et le boîtier de douille, afin de protéger la zone de contact (80) d'une pénétration d'eau ou de poussière.

4. Kit de connexion enfichable (100) selon la revendication 3, dans lequel le joint est une bague d'étanchéité (9) et aussi bien le boîtier de fiche (3) que le boîtier de douille (4) présentent respectivement une rainure sur leur face extérieure destinée à recevoir la bague d'étanchéité (9).

5. Kit de connexion enfichable (100) selon la revendication 1 ou 2, dans lequel le manchon d'étanchéité (5) est équipé sur sa face intérieure dans sa zone d'entrée et de sortie respectivement d'un élément d'étanchéité.

6. Kit de connexion enfichable (100) selon la revendication 5, dans lequel l'élément d'étanchéité est une bague d'étanchéité (9) et le manchon d'étanchéité (5) présente une rainure dans sa zone d'entrée et de sortie destinée à recevoir la bague d'étanchéité (9).

7. Kit de connexion enfichable (100) selon l'une quelconque des revendications 1 à 6, dans lequel le manchon d'étanchéité (5) présente un verrouillage avec lequel il peut être fixé sur le boîtier de fiche (3) ou sur le boîtier de douille (4) ou sur les deux.

8. Kit de connexion enfichable (100) selon la revendication 7, dans lequel le verrouillage est réalisé sous la forme d'un système à encliquetage, monté à une extrémité du manchon d'étanchéité (5), qui peut s'encliqueter à l'aide d'une languette sur le boîtier de fiche (3) ou sur le boîtier de douille (4).

9. Kit de connexion enfichable selon l'une quelconque des revendications 1 à 8, dans lequel les inserts de contact mâles ou femelles (30, 40) sont en métal et sont reliés fixement aux fils de câble (1, 1') par soudage par ultrasons.

10. Kit de connexion enfichable selon l'une quelconque des revendications 1 à 9, dans lequel les inserts de contact femelles et mâles (40, 30) peuvent s'encliqueter, dans une position de contact, dans le boîtier de fiche (3) ou le boîtier de douille (4) au moyen d'un système d'encliquetage prévu dans le boîtier de fiche ou le boîtier de douille (3, 4).

11. Kit de connexion enfichable selon la revendication 10, dans lequel le manchon d'étanchéité (5) présente une butée pour le boîtier de fiche (3), afin que le changement de fusible ne puisse être réalisé que sans courant.

12. Kit d'installation avec
- au moins un câble plat
- au moins un kit de connexion enfichable (100) selon l'une quelconque des revendications 1 à 11,
- au moins une dérivation.

13. Installation électrique, comprenant :
- une ligne de passage réalisée sous la forme de câble plat
- au moins un kit de connexion enfichable (100) selon l'une quelconque des revendications 1 à 11,
- au moins une dérivation reliée au câble plat par respectivement un kit de connexion enfichable (100).
